# FASCICULE DE BREVET EUROPEEN

(11) **EP 3 861 234 B1**
(45) Date de publication et mention de la délivrance du brevet: **17.08.2022**
(21) Numéro de dépôt: 19769542.2
(22) Date de dépôt: 20.09.2019
(51) Int. Cl.: F16H 57/04

(54) **RÉDUCTEUR DIFFÉRENTIEL COMPORTANT DES MOYENS DE RÉCUPÉRATION D'HUILE DANS LES DEUX SENS DE ROTATION**
DIFFERENZIALGETRIEBEREDUZIERER MIT MITTEL ZUM SAMMELN VON ÖL IN ZWEI DREHRICHTUNGEN
DIFFERENTIAL REDUCER COMPRISING MEANS FOR COLLECTING OIL IN THE TWO DIRECTIONS OF ROTATION

(30) Priorité: 02.10.2018 FR 1859111
(43) Date de publication de la demande: 11.08.2021
(73) Titulaire: Renault s.a.s, 92100 Boulogne Billancourt (FR); NISSAN MOTOR CO., LTD., Yokohama-shi, Kanagawa 221-0023 (JP)
(72) Inventeur: LELOUP, Wilfrield, 91581 ETRECHY (FR); CHABERT, Virginie, 78730 St Arnoult en Yvelines (FR); MAUDET, Frederic, 91330 YERRES (FR)
(74) Mandataire: Renault Group
(86) Numéro de dépôt international: PCT/EP2019/075404
(87) Numéro de publication internationale: WO 2020/069887

(56) Documents cités:
- WO-A1-2015/058788
- DE-A1- 10 359 505
- JP-A- S63 158 357
- US-A1- 2017 175 876
- US-A1- 2018 171 838

## Description

### DOMAINE TECHNIQUE DE L'INVENTION

L'invention concerne un réducteur différentiel de véhicule automobile comprenant :
- un mécanisme de différentiel sensiblement longitudinal comportant au moins une couronne dentée dont une portion inférieure est destinée à baigner dans de l'huile de lubrification ;
- un mécanisme de réduction comportant un arbre secondaire et un arbre primaire, un pignon de l'arbre primaire étant entraîné par la couronne dentée par l'intermédiaire d'un pignon de l'arbre secondaire ;
- un carter qui renferme le mécanisme de différentiel et le mécanisme de réduction, le mécanisme de différentiel et les arbres étant chacun portés dans le carter par une paire associée de paliers opposés, ledit carter comportant d'une part un premier demi-carter dont une paroi transversale interne comporte trois logement qui reçoivent chacun un premier palier de chaque paire, et d'autre part un second demi-carter dont une paroi transversale interne comporte trois logement qui reçoivent chacun un deuxième palier de chaque paire,
la rotation de la couronne dentée dans un premier sens de rotation étant susceptible de projeter de l'huile sensiblement transversalement depuis le haut de la couronne en direction des arbres de réducteur, chaque paroi transversale interne présentant des premiers moyens de récupération et de guidage de l'huile projetée par la couronne tournant dans ledit premier sens de rotation jusqu'aux logements de palier.

### ARRIERE PLAN TECHNIQUE DE L'INVENTION

On connaît de nombreux exemples de réducteurs différentiels de ce type. Dans la suite de la description et dans les revendications, un réducteur différentiel est défini comme un ensemble comportant un carter qui renferme un réducteur de vitesse et un mécanisme de différentiel, une couronne du mécanisme de différentiel étant engrenée avec un pignon d'arbre primaire du réducteur de vitesse. Le document WO 2015/058788 A1 montre un réducteur selon le préambule de la revendication 1.

Conventionnellement, une fois que le mécanisme de réducteur différentiel est monté dans les deux demi-carters et que les deux demi-carters sont réunis pour former un carter, ledit carter est rempli d'une huile de lubrification qui permet d'assurer la lubrification de la cage de pignons et des paliers de roulement par barbotage.

A cet effet, le niveau de l'huile dans le carter est fixé sensiblement au niveau de l'axe du mécanisme de réducteur différentiel ou axe de rotation de la couronne, selon la règle qui veut que le niveau de lubrifiant est fixé au niveau de l'élément roulant le plus bas.

Tant que le différentiel tourne à une vitesse inférieure à une vitesse déterminée, la lubrification de la cage de pignons est assurée par barbotage, la cage de pignons plongeant dans l'huile de lubrification. La cage est à cet effet une cage ouverte qui permet à l'huile de baigner les pignons.

Toutefois, une telle conception présente un inconvénient dès lors que le différentiel tourne à des vitesses élevées.

En effet, au-delà d'une vitesse déterminée, l'huile de lubrification est centrifugée par la couronne et est projetée contre les parois du carter et notamment les parois des demi-carters d'où elle s'écoule lentement par ruissellement en ne retournant que lentement vers le fond du logement. De ce fait, le niveau d'huile présent dans le logement recevant la cage de pignons devient insuffisant et inapte à assurer la lubrification par barbotage de ladite cage de pignons.

Ce défaut de lubrification peut, alors même que le niveau d'huile semble satisfaisant à l'arrêt, entraîner à plus ou moins longue échéance la destruction des éléments tournants du différentiel par manque d'huile.

Il est donc connu de réaliser des canaux de récupération et de guidage de l'huile projetée en direction des paliers de roulement et de la cage de pignon. Ces canaux de récupération sont orientés sensiblement tangentiellement aux logements de paliers de manière à récupérer l'huile de lubrification projetée par la couronne lorsqu'elle tourne dans un premier sens.

Cependant, les canaux de récupération et de guidage d'huile ne sont pas conçus pour récupérer de l'huile projetée par la couronne tournant dans un deuxième sens de rotation, opposé audit premier sens de rotation. Or, d'un modèle de véhicule à l'autre, on peut être amené à faire tourner la couronne dans un sens ou dans l'autre, par exemple en fonction de l'espace disponible pour le réducteur différentiel.

Pour garantir une bonne lubrification des éléments tournants, il était nécessaire de prévoir des carters différents en fonction du sens de rotation de la couronne.

Cependant, il serait avantageux de trouver une solution permettant de réduire les coûts de fabrication des véhicules indépendamment du sens de rotation de la couronne de différentiel.

### BREF RESUME DE L'INVENTION

L'invention propose un réducteur différentiel de véhicule automobile comprenant :
- un mécanisme de différentiel sensiblement longitudinal comportant au moins une couronne dentée dont une portion inférieure est destinée à baigner dans de l'huile de lubrification ;
- un mécanisme de réduction comportant un arbre secondaire et un arbre primaire, un pignon de l'arbre primaire étant entraîné par la couronne dentée par l'intermédiaire d'un pignon de l'arbre secondaire ;
- un carter qui renferme le mécanisme de différentiel et le mécanisme de réduction, le mécanisme de différentiel et les arbres étant chacun portés dans le carter par une paire associée de paliers opposés, ledit carter comportant d'une part un premier demi-carter dont une paroi transversale interne comporte trois logement qui reçoivent chacun un premier palier de chaque paire, et d'autre part un second demi-carter dont une paroi transversale interne comporte trois logement qui reçoivent chacun un deuxième palier de chaque paire,
la rotation de la couronne dentée dans un premier sens de rotation étant susceptible de projeter de l'huile sensiblement transversalement depuis le haut de la couronne en direction des arbres de réducteur, chaque paroi transversale interne présentant des premiers moyens de récupération et de guidage de l'huile projetée par la couronne tournant dans ledit premier sens de rotation jusqu'aux logements de palier ;
caractérisé en ce que chaque paroi interne comporte des deuxièmes moyens de récupération de l'huile projetée sensiblement transversalement par rotation de la couronne dentée dans un deuxième sens de rotation depuis le bas de la couronne en direction des arbres de réducteur.

Selon d'autres caractéristiques de l'invention :
- les deuxièmes moyens de récupération comportent une rampe inférieure de guidage de l'huile qui est formée dans la paroi transversale interne d'au moins un des demi-carter pour guider l'huile de lubrification projetée depuis le bas de la couronne jusqu'au pignon de l'arbre primaire ;
- le pignon de l'arbre secondaire est agencé à distance du flux d'huile s'écoulant sur la rampe inférieure ;
- l'arbre secondaire est décalé verticalement au-dessus du niveau de l'arbre primaire ;
- la rampe est réalisée par une nervure qui s'étend longitudinalement en saillie depuis la paroi transversale interne ;
- le logement du palier de l'arbre primaire comporte dans sa face axiale au moins une ouverture de récupération et de guidage de l'huile remonté par le pignon de l'arbre primaire depuis la rampe inférieure lorsque la couronne dentée tourne dans le deuxième sens de rotation ;
- le pourtour du logement du palier de l'arbre secondaire comporte au moins un canal de récupération et de guidage de l'huile remonté par le pignon de l'arbre primaire depuis la rampe inférieure lorsque la couronne dentée tourne dans le deuxième sens de rotation, le canal guidant l'huile jusqu'audit logement ;
- le pourtour du logement du palier de l'arbre secondaire comporte au moins une face de récupération et de guidage de l'huile projetée par le pignon de l'arbre primaire lorsque la couronne dentée tourne dans le deuxième sens de rotation, la face guidant l'huile jusqu'audit logement ;
- le pourtour du logement du premier palier du mécanisme de différentiel comporte au moins une face de récupération et de guidage de l'huile projetée par la couronne dentée lorsqu'elle tourne dans le deuxième sens de rotation ;
- au moins l'un des canaux de guidage ou l'une des faces de guidage est formé par au moins une nervure qui s'étend longitudinalement en saillie depuis la paroi transversale interne ;
- les premiers moyens de récupération d'huile sont réalisés directement dans la paroi interne des demi-carter.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en coupe brisée selon la ligne de coupe 1-1 de la figure 2 qui représente schématiquement un réducteur différentiel réalisé selon les enseignements de l'invention ;
- la figure 2 est une vue de face qui représente la paroi interne d'un premier demi-carter du réducteur différentiel de la figure 1 réalisé selon les enseignements de l'invention, indiquant le cheminement de l'huile de lubrification lorsque la couronne dentée tourne dans un deuxième sens de rotation ;
- la figure 3 est une vue similaire à celle de la figure 2 qui représente un deuxième demi-carter la paroi interne d'un premier demi-carter du réducteur différentiel de la figure 1 réalisé selon les enseignements de l'invention, indiquant le cheminement de l'huile de lubrification lorsque la couronne dentée tourne dans un premier sens de rotation ;
- la figure 4 est une vue identique celle de la figure 3 dans laquelle est indiqué le cheminement de l'huile de lubrification lorsque la couronne dentée tourne dans le deuxième sens de rotation ;
- la figure 5 est une vue identique celle de la figure 2 dans laquelle est indiqué le cheminement de l'huile de lubrification lorsque la couronne dentée tourne dans le premier sens de rotation.

### DESCRIPTION DETAILLEE DES FIGURES

Dans la description qui va suivre, des chiffres ou des références identiques désignent des pièces identiques ou ayant des fonctions similaires.

Par "direction longitudinale" on entendra la direction correspondant à l'axe du mécanisme de différentiel.

Par "direction verticale" on entendra la direction de la gravité, orthogonale au niveau d'huile de lubrification.

Par "direction transversale" on entendra toute direction perpendiculaire aux directions longitudinale et verticale.

Par "direction radiale" on entendra toute direction perpendiculaire à un axe longitudinal d'arbre.

Par "direction tangentielle" on entendra toute direction perpendiculaire aux directions radiale et longitudinale.

Par "intérieur" on désignera un élément proche de l'axe de rotation du mécanisme de différentiel.

Par "extérieur" on désignera un élément distant de l'axe de rotation du mécanisme de différentiel.

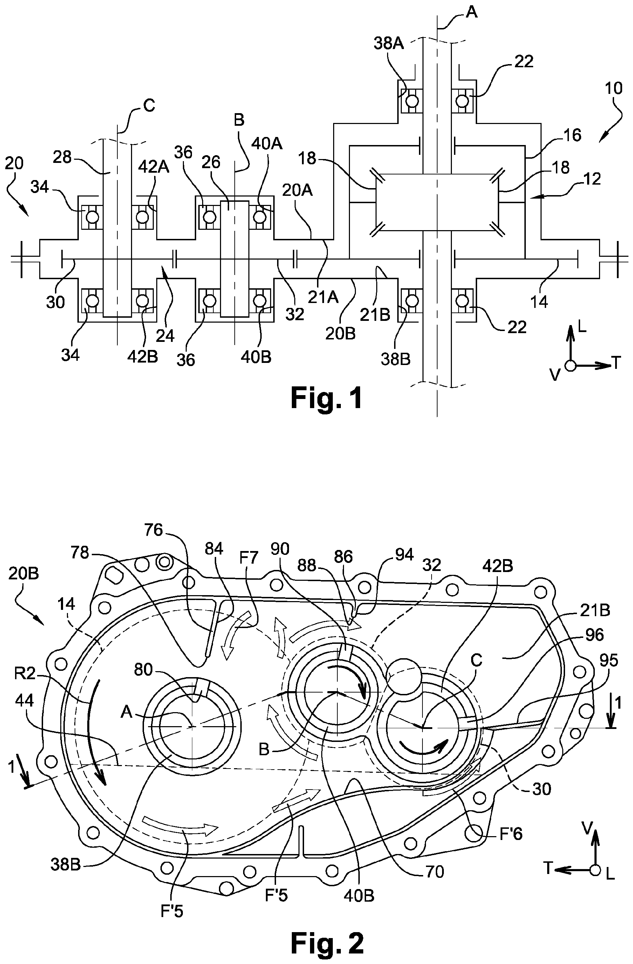

On a représenté schématiquement à la figure 1 un réducteur différentiel 10 pour un véhicule automobile. Il s'agit par exemple d'un pont arrière de transmission.

Le réducteur différentiel comporte un mécanisme 12 de différentiel sensiblement longitudinal comportant au moins une couronne 14 dentée qui s'étend dans un plan transversal vertical. La couronne 14 dentée est accolée à une cage 16 recevant des pignons satellites 18. La cage 16 de pignons est ouverte et elle comporte à cet effet des fenêtres (non représentées) permettant à de l'huile de lubrification d'y pénétrer.

De manière connue, le mécanisme de différentiel est enfermé dans un carter 20 formé de deux demi-carters comportant un premier demi-carter 20A et un deuxième demi-carter 20B. Le mécanisme 12 de différentiel est porté à rotation autour d'un axe longitudinal "A" entre les deux demi-carters 20A, 20B par deux paliers 22 opposés, dits paliers 22 de différentiel.

Le carter 18 referme aussi un mécanisme 24 de réduction comportant un arbre 26 secondaire d'axe "B" longitudinal et un arbre 28 primaire d'axe "C" longitudinal. L'arbre 28 primaire comporte un pignon 30, dit pignon 30 primaire, qui s'étend dans un plan vertical transversal et qui est engrené avec un pignon 32 vertical transversal de l'arbre 26 secondaire, dit pignon 32 secondaire. Le pignon 32 secondaire est lui-même engrené avec la couronne 14 dentée. Ainsi, le pignon 30 primaire est entraîné en rotation par la couronne 14 dentée par l'intermédiaire du pignon 32 secondaire.

Comme cela est visible à la figure 1, l'arbre 26 secondaire de réducteur est décalé dans une direction transversale de décalage, ici vers la gauche, par rapport au mécanisme 12 différentiel, et l'arbre 28 primaire est lui aussi décalé dans ladite direction transversale de décalage par rapport à l'arbre 26 secondaire.

L'arbre 28 primaire est porté dans le carter 20 par une paire associée de paliers 34 opposés, dits paliers 34 de primaire. De même, l'arbre 26 26 secondaire est porté dans le carter 20 par une paire associée de paliers 36 opposés, dits paliers 36 de secondaire. Les paliers 22, 34, 36 sont ici des paliers de roulement formés par exemple par des roulements à billes.

Le premier demi-carter 20A comporte une paroi 21A transversale interne qui comporte trois logements 38A, 40A, 42A qui reçoivent respectivement un premier palier 22 de la paire de paliers 22 de différentiel, un premier palier 36 de la paire de paliers 36 de secondaire et un premier palier 34 de la paire de paliers 34 de primaire.

Le deuxième demi-carter 20B comporte une paroi 21B transversale interne qui comporte trois logements 38B, 40B, 42B qui reçoivent respectivement un deuxième palier 22 de la paire de paliers 22 de différentiel, un deuxième palier 36 de la paire de paliers 36 de secondaire et un deuxième palier 34 de la paire de paliers 34 de primaire.

Le mécanisme 12 de différentiel et le réducteur 24 sont conventionnellement lubrifiés par de l'huile qui remplit ledit carter 20 jusqu'à un niveau symbolisé par la ligne 44 en traits interrompus de la figure 2. Le niveau 44 correspond sensiblement se situe généralement au voisinage de l'axe "A" de rotation du mécanisme 12 de différentiel de manière à le lubrifier par barbotage.

Ainsi, une portion inférieure de la couronne 14 est destinée à baigner dans l'huile de lubrification. Lors de la rotation de la couronne 14 dans un premier sens de rotation, sens horaire en référence à la figure 2, les dents de la couronne 14 projettent de l'huile sensiblement transversalement depuis le haut de la couronne en direction des arbres 26, 28 de réducteur.

Lors de la rotation du mécanisme de différentiel 12 à des vitesses élevées, et donc lors de la rotation de la couronne 14 à des vitesses élevées, il se peut que le mécanisme 12 de différentiel, et plus particulièrement la couronne 14, centrifuge l'huile jusqu'à ce qu'elle ruisselle sur les parois internes du carter 20, et plus particulièrement sur les parois 21A, 21B transversales internes des demi-carter 20A, 20B.

Ceci entraîne un déficit en huile de barbotage au niveau du logement 24 et plus particulièrement de la cage 16 de pignons satellites 18, ce qui peut conduire à une détérioration desdits pignons 22 et des paliers 22, 34, 36. Ainsi, lors du fonctionnement du mécanisme 12 de différentiel à des vitesses élevées, le niveau d'huile est à même de descendre en dessous de l'axe "A". Pour assurer un approvisionnement continu en huile des paliers 22, 34, 36 afin d'éviter leur détérioration, chaque paroi 21A, 21B transversale interne présente des premiers moyens de récupération et de guidage de l'huile projetée par la couronne 14 tournant dans ledit premier sens de rotation jusqu'aux logements 38A, 38B, 40A, 40B, 42A, 42B des paliers 22, 34, 36.

Ces premiers moyens de guidage et de récupération sont ici réalisés venus de matière avec les demi-carter 20A, 20B. Il s'agit par exemple de nervures agencées en saillies par rapport à aux parois 21A, 21B internes et/ou de canaux creusés dans lesdites parois 21A, 21B internes.

Les carters de l'état de la technique ne permettent de récupérer et de guider l'huile de lubrification que dans un sens de rotation de la couronne dentée. Or, il serait financièrement avantageux de pouvoir utiliser un même carter pour plusieurs configurations de véhicule. Ainsi un même modèle de carter peut être utilisé pour plusieurs modèles de véhicules. Or, selon les configurations, la couronne dentée peut tourner dans l'un ou l'autre des sens de rotation. Cependant, lorsque la couronne dentée tourne dans un sens opposé, les premiers moyens de récupération et de guidage ne permettent plus de lubrifier correctement les paliers. Jusqu'à présent, il était donc nécessaire de prévoir deux carters différents en fonction du sens de rotation de la couronne.

L'invention propose un carter polyvalent permettant de récupérer et guider l'huile de lubrification ruisselant sur les parois internes vers les paliers quel que soit le sens de rotation de la couronne 14 dentée.

A cet effet, les parois internes 21A, 21B des demi-carter 20A, 20B comportent des deuxièmes moyens de récupération de l'huile projetée sensiblement transversalement par rotation de la couronne 14 dans un deuxième sens de rotation depuis le bas de la couronne en direction des arbres de réducteur.

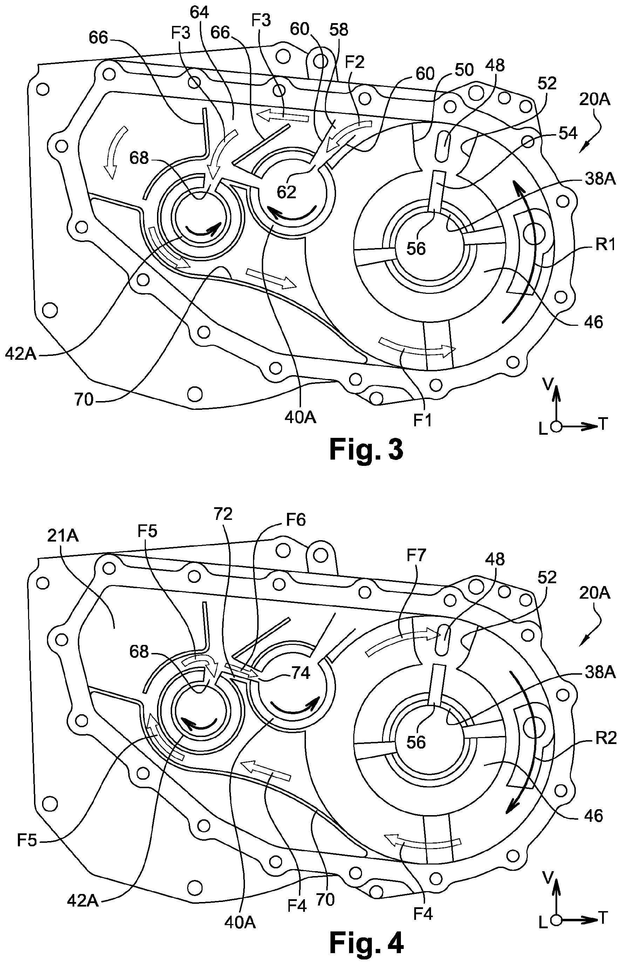

On a représenté aux figures 3 et 4 la paroi 21A interne du premier demi-carter 20A. Elle comporte une cloche 46 qui est destinée à abriter la cage 16 de pignons. Sur le pourtour de cette cloche 46, se trouve une niche 48 supérieure qui est destinée à recevoir de l'huile projetée par la couronne 14 dentée. Cette niche 48 forme un réservoir d'huile. La niche 48 est délimitée circonférentiellement par une première face 50 radiale longitudinale et par une deuxième face 52 radiale longitudinale en vis-à-vis. La deuxième face 52 radiale est tournée transversalement vers les arbres 26, 28 primaire et secondaire. La première face 50 radiale fait partie des premiers moyens de récupération d'huile qui permet de récupérer l'huile lorsque la couronne 14 tourne dans le premier sens, tandis que la deuxième face 52 radiale fait partie des deuxième moyens de récupération d'huile qui permet de récupérer l'huile lorsque la couronne 14 tourne dans le deuxième sens.

Un canal 54 radial, dit canal 54 de différentiel, agencé sur le pourtour du logement 38A permet de guider l'écoulement de l'huile vers le bas jusqu'au logement 38A du premier palier 22 de différentiel. Le canal 54 de différentiel débouche dans une ouverture 56 de la paroi axiale du logement, verticalement au droit du palier 22 de différentiel pour permettre une bonne lubrification du palier 22 de différentiel. Le canal 54 de différentiel est ici réalisé en creux dans la paroi 21A interne du premier demi-carter 20A.

Chaque logement 40A, 42A du mécanisme 24 de réducteur est aussi équipé de canaux faisant partie des premiers moyens de récupération d'huile.

Ainsi, un canal 58, dit canal 58 de secondaire, est délimité par deux nervures 60 en saillie par rapport à la paroi 21A transversale interne. Le canal 58 de secondaire s'étend sur le pourtour du logement 40A du premier palier 36 de secondaire. Le canal 58 de secondaire s'étend globalement tangentiellement par rapport à la trajectoire des dents de la couronne 14 dentée depuis une entrée vers une sortie qui débouche dans une ouverture 62 réalisée dans la paroi axiale du logement 40A du premier palier 36 de secondaire. L'entrée du canal 58 de secondaire est plus large que la sortie de manière que le canal 58 de secondaire présente une forme d'entonnoir permettant de récolter une grande quantité d'huile pour lubrifier le premier palier 36 de secondaire. Du fait de son orientation tangentielle par rapport à la couronne 14 dentée, ce canal 58 de secondaire ne permet pas de récupérer d'huile lorsque la couronne 14 dentée tourne dans le deuxième sens de rotation.

De même, un canal 64, dit canal 64 de primaire, est délimité par deux nervures 66 en saillie par rapport à la paroi 21A transversale interne. Le canal 64 de primaire s'étend sur le pourtour du logement 42A du premier palier 34 de primaire. Le canal 64 de primaire s'étend globalement depuis une entrée qui est globalement tournée vers une portion supérieure de la couronne 14 dentée vers une sortie qui débouche dans une ouverture 68 réalisée dans la paroi axiale du logement 40A du premier palier 36 de secondaire. L'entrée du canal 64 de primaire est plus large que la sortie de manière que le canal 64 de primaire présente une forme d'entonnoir permettant de récolter une grande quantité d'huile pour lubrifier le premier palier 34 de primaire. Du fait de son orientation vers la couronne 14 dentée, ce canal 64 de primaire ne permet sensiblement pas de récupérer d'huile lorsque la couronne 14 dentée tourne dans le deuxième sens de rotation.

Le premier demi-carter 20A comporte aussi des deuxièmes moyens pour récupérer l'huile de lubrification lorsque la couronne 14 dentée tourne dans le deuxième sens de rotation, comme cela est illustré à la figure 4.

Les deuxièmes moyens de récupération comportent une rampe 70 inférieure de guidage de l'huile qui est formée dans la paroi 21A transversale interne du premier demi-carter 20A pour guider l'huile de lubrification projetée depuis le bas de la couronne 14 jusqu'au pignon 30 primaire. La rampe 70 est ici formée par une nervure en saillie par rapport à la paroi 21A transversale interne. La rampe 70 est tournée vers le haut du carter 20.

La première extrémité de la rampe 70, représentée à droite à la figure 4, est agencée au-dessous de la couronne 14 dentée. Elle présente une forme d'arc de cercle. Cette première extrémité est agencée radialement en vis-à-vis et à proximité des dents de la couronne 14 dentée. Ainsi, lorsque la couronne 14 dentée tourne dans le deuxième sens, comme indiqué par la flèche R2, la couronne 14 dentée joue le rôle d'une roue hydraulique qui crée un courant d'huile qui remonte la rampe 70 vers sa deuxième extrémité.

La deuxième extrémité de la rampe 70, située à gauche à la figure 4, est agencée au-dessous du pignon 30 primaire. Elle présente une forme d'arc de cercle qui entoure une portion du pourtour du logement 42A du premier palier 34 de primaire. Cette deuxième extrémité est agencée radialement en vis-à-vis et à proximité des dents du pignon 30 primaire. Le pignon 30 primaire tournant dans le même sens que la couronne 14 dentée, ses dents transportent l'huile poussée vers le haut de la rampe 70 par la couronne 14 dentée vers le haut jusqu'à l'ouverture 68 pour lubrifier le premier palier 34 de primaire.

La première extrémité de la rampe 70 est plus basse que la deuxième extrémité. Ainsi, la rampe 70 présente une pente qui descend depuis la deuxième extrémité vers la première extrémité.

Pour permettre à l'huile de lubrification de circuler le long de la rampe 70 jusqu'au pignon 30 primaire, le pignon 32 secondaire est agencé à distance du flux d'huile circulant le long de la rampe 70 inférieure. Ceci évite que la majorité de l'huile ne soit interceptée par le pignon 32 secondaire. A cet effet, l'arbre 26 secondaire est ici décalé verticalement au-dessus du niveau de l'arbre 28 primaire. De ce fait, le logement 40A du palier 36 de secondaire est décalé verticalement vers le haut par rapport au logement 42A du palier 34 de primaire.

Un canal 72 est agencé sur le pourtour du logement 40A du premier palier 36 de secondaire. Le canal 72 s'étend tangentiellement à la trajectoire des dents du pignon 30 primaire depuis une entrée située au niveau de la portion supérieure du pignon 30 primaire jusqu'à une sortie débouchant dans une ouverture 74 de la paroi axiale du logement 40A du premier palier 36 de secondaire pour alimenter en huile de lubrification le premier palier 36 de secondaire lorsque la couronne 14 dentée tourne dans le deuxième sens. Ce canal 72 est délimité par deux nervures en saillie par rapport à la paroi 21A transversale interne.

Lors de la rotation de la couronne 14 dentée dans le premier sens, indiqué par la flèche R1 de la figure 3, l'huile de lubrification est prélevée par les dents de la couronne 14 dentée pour remonter vers le haut du carter 20 comme indiqué par la flèche "F1". Une partie de l'huile de lubrification est projetée contre la première face 50 radiale de la niche 48. L'huile de lubrification contenue dans la niche 48 est ensuite guidée jusqu'au logement 38A du premier palier 22 de différentiel par le canal 54 de différentiel pour assurer sa lubrification.

Une autre partie de l'huile de lubrification est projetée globalement transversalement en direction des arbres 26, 28 primaire et secondaire depuis une portion supérieure de la couronne 14 dentée. Comme indiqué par la flèche "F2", une portion de cette huile de lubrification projetée entre dans le canal 58 de secondaire du fait de son orientation tangentielle et est ainsi guidée jusqu'au logement 40A du palier 36 de secondaire pour assurer sa lubrification.

Comme indiqué par les flèches "F3", une autre portion de cette huile de lubrification projetée entre dans le canal 64 de primaire du fait de son orientation tangentielle et est ainsi guidée jusqu'au logement 42A du palier 34 de primaire pour assurer sa lubrification.

L'huile de lubrification s'écoule ensuite par gravité jusqu'à la rampe 70 inférieure. L'huile s'écoule par gravité le long de la pente de la rampe 70 inférieure jusqu'au bas de la couronne 14 dentée avant de recommencer un cycle de lubrification.

Lors de la rotation de la couronne 14 dentée dans le deuxième sens, indiqué par la flèche R2 de la figure 4, la couronne 14 dentée crée un courant d'huile de lubrification, indiqué par les flèches "F4", qui remonte la pente de la rampe 70 jusqu'au pignon 30 primaire.

Celui-ci remonte ensuite l'huile de lubrification jusqu'à l'ouverture 68, comme indiqué par les flèches "F5", pour lubrifier le premier palier 34 primaire ainsi que jusqu'au canal 72 de secondaire, comme indiqué par la flèche "F6", pour lubrifier le premier palier 36 secondaire. Le premier palier 22 de différentiel est quant à lui lubrifié par de l'huile de lubrification remontée directement par la couronne 14 dentée et projetée contre la deuxième face 52 radiale délimitant la niche 48, comme indiqué par la flèche "F7".

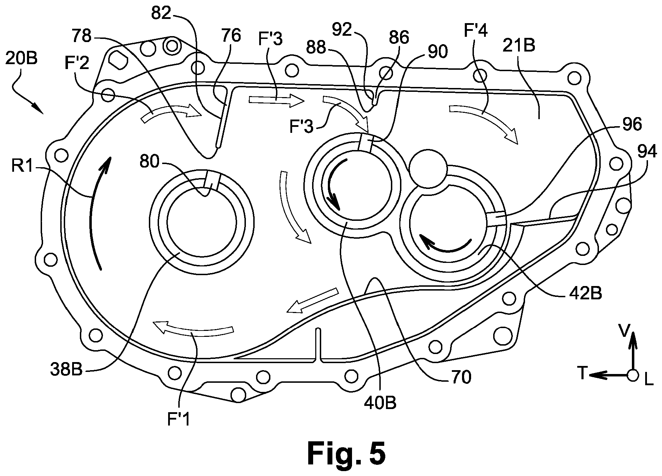

On a représenté aux figures 2 et 5 la paroi 21B interne du deuxième demi-carter 20B. Sur ce deuxième demi-carter 20B, les premiers moyens de récupération d'huile sont formés uniquement par une face d'une nervure qui est orientée globalement verticalement et qui s'étend au-dessus d'un logement associé de palier. Une extrémité inférieure de la nervure est agencée au droit d'une ouverture réalisée dans la face axiale du logement associé pour permettre à l'huile récupérée par ladite face de s'égoutter dans le logement associé. La nervure est réalisée venue de matière avec le demi-carter 20B.

Ainsi, une première nervure 76, dite nervure 76 de différentiel, s'étend en saillie par rapport à la paroi 21B transversale interne. La nervure 76 de différentiel est agencée au-dessus du logement 38B du deuxième palier 22 de différentiel. La nervure 76 de différentiel s'étend globalement verticalement, dans l'exemple représenté aux figures 2 et 5, elle est légèrement inclinée. La nervure 76 s'étend depuis une extrémité supérieure, qui est ici agencée au niveau d'une paroi interne supérieure du demi-carter 20B, jusqu'à une extrémité 78 inférieure libre. Le logement 38B comporte une ouverture 80 radiale qui est réalisée dans sa partie supérieure, au droit de l'extrémité 78 inférieure libre de la nervure 76 de différentiel. La nervure 76 de différentiel est délimitée par une première face 82 latérale et par une deuxième face 84 latérale. La première face 82 latérale est apte à intercepter de l'huile projetée par la couronne 14 dentée lorsqu'elle tourne dans le premier sens de rotation R1 comme indiqué à la figure 5. La deuxième face 84 latérale est apte à intercepter de l'huile projetée par la couronne 14 dentée lorsqu'elle tourne dans le deuxième sens de rotation R2 comme indiqué à la figure 2.

Ainsi, la première face 82 latérale fait partie des premiers moyens de récupération d'huile, tandis que la deuxième face 84 latérale fait partie des deuxième moyens de récupération d'huile.

En variante non représentée de l'invention, la première face latérale appartenant aux premiers moyens de récupération est portée par une première nervure associée, tandis que la deuxième face latérale appartenant aux deuxième moyens de récupération est portée par une deuxième nervure associée. La première nervure et la deuxième nervure sont agencées de manière à former un "V" dont la pointe est agencée au droit de l'ouverture du logement.

De la même manière une deuxième nervure 86, dite nervure 86 de secondaire, s'étend en saillie par rapport à la paroi 21B transversale interne. La nervure 86 de secondaire est agencée au-dessus du logement 40B du deuxième palier 36 de secondaire. La nervure 86 de secondaire s'étend globalement verticalement, dans l'exemple représenté aux figures 2 et 5, elle est légèrement inclinée. La nervure 86 s'étend depuis une extrémité supérieure, qui est ici agencée au niveau de la paroi interne supérieure du demi-carter 20B, jusqu'à une extrémité 88 inférieure libre. Le logement 40B comporte une ouverture 90 radiale qui est réalisée dans sa partie supérieure, au droit de l'extrémité 88 inférieure libre de la nervure 86 de secondaire. La nervure 86 de secondaire est délimitée par une première face 92 latérale et par une deuxième face 94 latérale. La première face 92 latérale est apte à intercepter de l'huile projetée par la couronne 14 dentée lorsqu'elle tourne dans le premier sens de rotation R1 comme indiqué à la figure 5. La deuxième face 84 latérale est apte à intercepter de l'huile projetée par le pignon 30 primaire lorsque la couronne 14 dentée tourne dans le deuxième sens de rotation R2 comme indiqué à la figure 2.

Ainsi, la première face 92 latérale fait partie des premiers moyens de récupération d'huile, tandis que la deuxième face 94 latérale fait partie des deuxième moyens de récupération d'huile.

Le logement 42B du deuxième palier 34 de primaire est ici alimenté en huile de lubrification par une gouttière 95 formée d'une face tournée vers le haut et qui s'étend en pente depuis une extrémité située au niveau d'une paroi latérale interne demi-carter 20B jusqu'à une ouverture 96 réalisée dans une face axiale du logement 42B. Cette gouttière 95 est ici commune aux premiers moyens de récupération d'huile et aux deuxièmes moyens de récupération d'huile car elle permet de récupérer et de guider l'huile de lubrification jusqu'au deuxième palier 34 de primaire quel que soit le sens R1 ou R2 de rotation de la couronne 14 dentée.

Comme sur le premier demi-carter 20A, le deuxième demi-carter 20B comporte une rampe 70 inférieure de guidage de l'huile qui est formée dans la paroi 21B transversale interne du deuxième demi-carter 20B pour guider l'huile de lubrification projetée depuis le bas de la couronne 14 jusqu'au pignon 30 primaire. La rampe 70 est ici formée par une face d'épaulement. La rampe 70 est tournée vers le haut du carter 20.

La première extrémité de la rampe 70, représentée à gauche aux figures 2 et 5, est agencée au-dessous de la couronne 14 dentée. Elle présente une forme d'arc de cercle. Cette première extrémité est agencée radialement en vis-à-vis et à proximité des dents de la couronne 14 dentée. Ainsi, lorsque la couronne 14 dentée tourne dans le deuxième sens, comme indiqué par la flèche R2, la couronne 14 dentée joue le rôle d'une roue hydraulique qui crée un courant d'huile qui remonte la rampe 70 vers sa deuxième extrémité.

La deuxième extrémité de la rampe 70, située à gauche aux figures 2 et 5, est agencée au-dessous du pignon 30 primaire. Elle présente une forme d'arc de cercle qui entoure une portion du pourtour du logement 42B du deuxième palier 34 de primaire. Cette deuxième extrémité est agencée radialement en vis-à-vis et à proximité des dents du pignon 30 primaire. Le pignon 30 primaire tournant dans le même sens que la couronne 14 dentée, ses dents transportent l'huile poussée vers le haut de la rampe 70 par la couronne 14 dentée vers le haut jusqu'à l'ouverture 96 pour lubrifier le premier palier 34 de primaire.

La première extrémité de la rampe 70 est plus basse que la deuxième extrémité. Ainsi, la rampe 70 présente une pente qui descend depuis la deuxième extrémité vers la première extrémité.

Pour permettre à l'huile de lubrification de circuler le long de la rampe 70 jusqu'au pignon 30 primaire, le pignon 32 secondaire est agencé à distance du flux d'huile circulant le long de la rampe 70 inférieure. Ceci évite que la majorité de l'huile ne soit interceptée par le pignon 32 secondaire. A cet effet, l'arbre 26 secondaire est ici décalé verticalement au-dessus du niveau de l'arbre 28 primaire. De ce fait, le logement 40B du palier 36 de secondaire est décalé verticalement vers le haut par rapport au logement 42B du palier 34 de primaire.

Lors de la rotation de la couronne 14 dentée dans le premier sens, indiqué par la flèche R1 de la figure 5, l'huile de lubrification est prélevée par les dents de la couronne 14 dentée pour remonter vers le haut du carter 20 comme indiqué par la flèche "F'1". Une partie de l'huile de lubrification est projetée contre la première face 82 latérale de la nervure 76 de différentiel, comme indiqué par la flèche "F'2". L'huile de lubrification récupérée par la nervure 76 de différentiel s'écoule jusqu'à l'extrémité 78 inférieure libre, puis s'égoutte jusqu'au logement 38B du deuxième palier 22 de différentiel par l'ouverture 80 pour assurer sa lubrification.

Une autre partie de l'huile de lubrification est projetée globalement transversalement en direction des arbres 26, 28 primaire et secondaire depuis une portion supérieure de la couronne 14 dentée. Comme indiqué par les flèches "F'3", cette huile de lubrification récupérée par la première face 92 latérale de la nervure 86 de secondaire. L'huile de lubrification récupérée par la nervure 86 de secondaire s'écoule jusqu'à l'extrémité 88 inférieure libre, puis s'égoutte jusqu'au logement 40B du deuxième palier 36 de secondaire par l'ouverture 90 pour assurer sa lubrification.

Comme indiqué par la flèche "F'4", de l'huile de lubrification est projetée par le pignon 32 secondaire et par le pignon 30 primaire vers la portion de paroi 21B transversale interne située au-dessus de la gouttière 95. Cette huile est récupérée par la gouttière 95 qui la guide jusqu'à l'ouverture 96 du logement 42B du deuxième palier 34 de primaire pour assurer sa lubrification.

L'huile de lubrification s'écoule ensuite par gravité jusqu'à la rampe 70 inférieure. L'huile s'écoule par gravité le long de la pente de la rampe 70 inférieure jusqu'au bas de la couronne 14 dentée avant de recommencer un cycle de lubrification.

Lors de la rotation de la couronne 14 dentée dans le deuxième sens, indiqué par la flèche R2 de la figure 2, la couronne 14 dentée crée un courant d'huile de lubrification, indiqué par les flèches "F'5", qui remonte la pente de la rampe 70 jusqu'au pignon 30 primaire. Celui-ci remonte ensuite l'huile de lubrification jusqu'à l'ouverture 96, comme indiqué par la flèche "F'6", pour lubrifier le premier palier 34 primaire. Une partie de l'huile de lubrification est projetée par le pignon 30 primaire contre la deuxième face 94 de la nervure 86 de secondaire. L'huile de lubrification récupérée par la nervure 86 de secondaire s'écoule jusqu'à l'extrémité 88 inférieure libre, puis s'égoutte jusqu'au logement 40B du deuxième palier 36 de secondaire par l'ouverture 90 pour assurer sa lubrification.

Le deuxième palier 22 de différentiel est quant à lui lubrifié par de l'huile de lubrification remontée directement par la couronne 14 dentée et projetée contre la deuxième face 84 de la nervure 76 de différentiel, comme indiqué par la flèche "F'7". L'huile de lubrification récupérée par la nervure 76 de différentiel s'écoule jusqu'à l'extrémité 78 inférieure libre, puis s'égoutte jusqu'au logement 38B du deuxième palier 22 de différentiel par l'ouverture 80 pour assurer sa lubrification.

Le carter 20 réalisé selon les enseignements de l'invention est ainsi susceptible d'être adapté pour des véhicules dans lesquels la couronne 14 dentée tourne dans un sens ou dans l'autre. Ainsi, il n'est plus nécessaire de concevoir deux carters différents en fonction du sens de rotation de la couronne dentée, ce qui permet de réduire sensiblement les coûts de production du réducteur différentiel.

L'invention permet plus particulièrement de réaliser deux circuits pour l'huile de lubrification en fonction du sens de rotation de la couronne dentée. Chaque circuit de lubrification est conçu pour lubrifier chaque palier du réducteur différentiel 10.

## Revendications

1. Réducteur différentiel (10) de véhicule automobile comprenant :
- un mécanisme (12) de différentiel sensiblement longitudinal comportant au moins une couronne (14) dentée dont une portion inférieure est destinée à baigner dans de l'huile de lubrification ;
- un mécanisme (24) de réduction comportant un arbre (26) secondaire et un arbre (28) primaire, un pignon (30) de l'arbre (28) primaire étant entraîné par la couronne (14) dentée par l'intermédiaire d'un pignon (32) de l'arbre (26) secondaire ;
- un carter (20) qui renferme le mécanisme (12) de différentiel et le mécanisme (24) de réduction, le mécanisme (12) de différentiel et les arbres (26, 28) étant chacun portés dans le carter (20) par une paire associée de paliers (22, 34, 36) opposés, ledit carter (20) comportant d'une part un premier demi-carter (20A) dont une paroi (21A) transversale interne comporte trois logement (38A, 40A, 42A) qui reçoivent chacun un premier palier (22, 34, 36) de chaque paire, et d'autre part un second demi-carter (20B) dont une paroi (21B) transversale interne comporte trois logement (38B, 40B, 42B) qui reçoivent chacun un deuxième palier (22, 34, 36) de chaque paire,
la rotation de la couronne (14) dentée dans un premier sens (R1) de rotation étant susceptible de projeter de l'huile sensiblement transversalement depuis le haut de la couronne (14) en direction des arbres (26, 28) de réducteur, chaque paroi (21A, 21B) transversale interne présentant des premiers moyens de récupération et de guidage de l'huile projetée par la couronne (14) tournant dans ledit premier sens (R1) de rotation jusqu'aux logements (38A, 38B, 40A, 40B, 42A, 42B) de palier ;
**caractérisé en ce que** chaque paroi (21A, 21B) interne comporte des deuxièmes moyens de récupération de l'huile projetée sensiblement transversalement par rotation de la couronne (14) dentée dans un deuxième sens (R2) de rotation depuis le bas de la couronne (14) en direction des arbres (26, 28) de réducteur.

2. Réducteur différentiel (10) selon la revendication précédente, **caractérisé en ce que** les deuxièmes moyens de récupération comportent une rampe (70) inférieure de guidage de l'huile qui est formée dans la paroi (21A, 21B) transversale interne d'au moins un des demi-carter (20A, 20B) pour guider l'huile de lubrification projetée depuis le bas de la couronne (14) jusqu'au pignon (30) de l'arbre (26) primaire.

3. Réducteur différentiel (10) selon la revendication précédente, **caractérisé en ce que** le pignon (32) de l'arbre (26) secondaire est agencé à distance du flux d'huile s'écoulant sur la rampe (70) inférieure.

4. Réducteur différentiel (10) selon la revendication précédente, **caractérisé en ce que** l'arbre (26) secondaire est décalé verticalement au-dessus du niveau de l'arbre (28) primaire.

5. Réducteur différentiel (10) selon l'une quelconque des revendications 2 à 4, **caractérisé en ce que** la rampe (70) est réalisée par une nervure qui s'étend longitudinalement en saillie depuis la paroi (21A) transversale interne.

6. Réducteur différentiel (10) selon l'une quelconque des revendications 2 à 5, **caractérisé en ce que** le logement (42A, 42B) du palier (34) de l'arbre (28) primaire comporte dans sa face axiale au moins une ouverture (68, 96) de récupération et de guidage de l'huile remonté par le pignon (30) de l'arbre (28) primaire depuis la rampe (70) inférieure lorsque la couronne (14) dentée tourne dans le deuxième sens (R2) de rotation.

7. Réducteur différentiel (10) selon l'une quelconque des revendications 2 à 6, **caractérisé en ce que** le pourtour du logement (40A) du palier (36) de l'arbre (26) secondaire comporte au moins un canal (72) de récupération et de guidage de l'huile remonté par le pignon (30) de l'arbre (28) primaire depuis la rampe (70) inférieure lorsque la couronne (14) dentée tourne dans le deuxième sens de rotation, le canal (72) guidant l'huile jusqu'audit logement (40A).

8. Réducteur différentiel (10) selon l'une quelconque des revendications 2 à 6, **caractérisé en ce que** le pourtour du logement (40B) du palier (36) de l'arbre (26) secondaire comporte au moins une face (94) de récupération et de guidage de l'huile projetée par le pignon (30) de l'arbre (28) primaire lorsque la couronne (14) dentée tourne dans le deuxième sens de rotation, la face (94) guidant l'huile jusqu'audit logement (40B).

9. Réducteur différentiel (10) selon l'une quelconque des revendications 2 à 8, **caractérisé en ce que** le pourtour du logement du premier palier du mécanisme de différentiel comporte au moins une face (52, 84) de récupération et de guidage de l'huile projetée par la couronne (14) dentée lorsqu'elle tourne dans le deuxième sens de rotation.

10. Réducteur différentiel (10) selon l'une quelconque des revendications 5 à 9, **caractérisé en ce qu'**au moins l'un des canaux de guidage ou l'une des faces de guidage est formé par au moins une nervure qui s'étend longitudinalement en saillie depuis la paroi (21A, 21B) transversale interne.

11. Réducteur différentiel (10) selon l'une quelconque des revendications précédentes, **caractérisé en ce que** les premiers moyens de récupération d'huile sont réalisés directement dans la paroi (21A, 21B) interne des demi-carter (20A, 20B).

## Patentansprüche

1. Differentialuntersetzungsgetriebe (10) eines Kraftfahrzeugs, welches umfasst:
- einen im Wesentlichen länglichen Differentialmechanismus (12), der wenigstens ein Tellerrad (14) umfasst, von dem ein unterer Abschnitt dazu bestimmt ist, in Schmieröl einzutauchen;
- einen Untersetzungsmechanismus (24), der eine Sekundärwelle (26) und eine Primärwelle (28) umfasst, wobei ein Ritzel (30) der Primärwelle (28) durch das Tellerrad (14) über ein Ritzel (32) der Sekundärwelle (26) angetrieben wird;
- ein Gehäuse (20), welches den Differentialmechanismus (12) und den Untersetzungsmechanismus (24) umschließt, wobei der Differentialmechanismus (12) und die Wellen (26, 28) jeweils im Gehäuse (20) in einem zugeordneten Paar einander gegenüberliegender Lager (22, 34, 36) gelagert sind, wobei das Gehäuse (20) einerseits eine erste Gehäusehälfte (20A) umfasst, von der eine innere Querwand (21A) drei Sitze (38A, 40A, 42A) umfasst, welche jeweils ein erstes Lager (22, 34, 36) eines jeweiligen Paares aufnehmen, und andererseits eine zweite Gehäusehälfte (20B), von der eine innere Querwand (21B) drei Sitze (38B, 40B, 42B) umfasst, welche jeweils ein zweites Lager (22, 34, 36) eines jeweiligen Paares aufnehmen,
wobei die Drehung des Tellerrades (14) in einer ersten Drehrichtung (R1) Öl im Wesentlichen quer vom oberen Bereich des Tellerrades (14) in Richtung der Untersetzungswellen (26, 28) spritzen kann, wobei jede innere Querwand (21A, 21B) erste Mittel zum Sammeln und zur Führung des Öls, das von dem sich in der ersten Drehrichtung (R1) drehenden Tellerrad (14) verspritzt wird, bis zu den Lagersitzen (38A, 38B, 40A, 40B, 42A, 42B) aufweist,
**dadurch gekennzeichnet, dass** jede innere Wand (21A, 21B) zweite Mittel zum Sammeln des Öls umfasst, das durch Drehung des Tellerrades (14) in einer zweiten Drehrichtung (R2) im Wesentlichen quer vom unteren Bereich des Tellerrades (14) in Richtung der Untersetzungswellen (26, 28) gespritzt wird.

2. Differentialuntersetzungsgetriebe (10) nach dem vorhergehenden Anspruch, **dadurch gekennzeichnet, dass** die zweiten Mittel zum Sammeln eine untere Führungsrampe (70) für das Öl umfassen, welche in der inneren Querwand (21A, 21B) wenigstens einer der Gehäusehälften (20A, 20B) ausgebildet ist, um das vom unteren Bereich des Tellerrades (14) aus gespritzte Öl bis zum Ritzel (30) der Primärwelle (26) zu führen.

3. Differentialuntersetzungsgetriebe (10) nach dem vorhergehenden Anspruch, **dadurch gekennzeichnet, dass** das Ritzel (32) der Sekundärwelle (26) in einem Abstand von dem Ölstrom angeordnet ist, der auf der unteren Rampe (70) fließt.

4. Differentialuntersetzungsgetriebe (10) nach dem vorhergehenden Anspruch, **dadurch gekennzeichnet, dass** die Sekundärwelle (26) bezüglich der Höhe der Primärwelle (28) vertikal nach oben versetzt ist.

5. Differentialuntersetzungsgetriebe (10) nach einem der Ansprüche 2 bis 4, **dadurch gekennzeichnet, dass** die Rampe (70) von einer Rippe gebildet wird, welche sich von der inneren Querwand (21A) vorstehend in Längsrichtung erstreckt.

6. Differentialuntersetzungsgetriebe (10) nach einem der Ansprüche 2 bis 5, **dadurch gekennzeichnet, dass** der Sitz (42A, 42B) des Lagers (34) der Primärwelle (28) in seiner axialen Seite wenigstens eine Öffnung (68, 96) zum Sammeln und zur Führung des Öls umfasst, welches durch das Ritzel (30) der Primärwelle (28) von der unteren Rampe (70) aus nach oben befördert wird, wenn sich das Tellerrad (14) in der zweiten Drehrichtung (R2) dreht.

7. Differentialuntersetzungsgetriebe (10) nach einem der Ansprüche 2 bis 6, **dadurch gekennzeichnet, dass** der Umfang des Sitzes (40A) des Lagers (36) der Sekundärwelle (26) wenigstens einen Kanal (72) zum Sammeln und zur Führung des Öls umfasst, das durch das Ritzel (30) der Primärwelle (28) von der unteren Rampe (70) aus nach oben befördert wird, wenn sich das Tellerrad (14) in der zweiten Drehrichtung dreht, wobei der Kanal (72) das Öl bis zum Sitz (40A) führt.

8. Differentialuntersetzungsgetriebe (10) nach einem der Ansprüche 2 bis 6, **dadurch gekennzeichnet, dass** der Umfang des Sitzes (40B) des Lagers (36) der Sekundärwelle (26) wenigstens eine Seite (94) zum Sammeln und zur Führung des Öls umfasst, das durch das Ritzel (30) der Primärwelle (28) verspritzt wird, wenn sich das Tellerrad (14) in der zweiten Drehrichtung dreht, wobei die Seite (94) das Öl bis zum Sitz (40B) führt.

9. Differentialuntersetzungsgetriebe (10) nach einem der Ansprüche 2 bis 8, **dadurch gekennzeichnet, dass** der Umfang des Sitzes des ersten Lagers des Differentialmechanismus wenigstens eine Seite (52, 84) zum Sammeln und zur Führung des Öls umfasst, das durch das Tellerrad (14) verspritzt wird, wenn es sich in der zweiten Drehrichtung dreht.

10. Differentialuntersetzungsgetriebe (10) nach einem der Ansprüche 5 bis 9, **dadurch gekennzeichnet, dass** wenigstens einer der Führungskanäle oder eine der Führungsflächen von wenigstens einer Rippe gebildet wird, welche sich von der inneren Querwand (21A, 21B) vorstehend in Längsrichtung erstreckt.

11. Differentialuntersetzungsgetriebe (10) nach einem der vorhergehenden Ansprüche, **dadurch gekennzeichnet, dass** die ersten Mittel zum Sammeln des Öls direkt in der inneren Wand (21A, 21B) der Gehäusehälften (20A, 20B) ausgebildet sind.

## Claims

1. Motor vehicle differential reducer (10) comprising:
- a substantially longitudinal differential mechanism (12) comprising at least one ring gear (14) of which a lower portion is intended to be immersed in lubricating oil;
- a reduction mechanism (24) comprising a secondary shaft (26) and a primary shaft (28), a pinion (30) of the primary shaft (28) being driven by the ring gear (14) via a pinion (32) of the secondary shaft (26);
- a case (20) which contains the differential mechanism (12) and the reduction mechanism (24), the differential mechanism (12) and the shafts (26, 28) each being borne in the case (20) by an associated pair of opposite bearings (22, 34, 36), said case (20) comprising, on the one hand, a first half-case (20A) of which an internal transverse wall (21A) comprises three housings (38A, 40A, 42A) which each receive a first bearing (22, 34, 36) of each pair, and, on the other hand, a second half-case (20B) of which an internal transverse wall (21B) comprises three housings (38B, 40B, 42B) which each receive a second bearing (22, 34, 36) of each pair,
the rotation of the ring gear (14) in a first direction of rotation (R1) being capable of spraying oil substantially transversely from the top of the ring gear (14) in the direction of the reducer shafts (26, 28), each internal transverse wall (21A, 21B) having first means for collecting and guiding the oil sprayed by the ring gear (14) rotating in said first direction of rotation (R1) to the bearing housings (38A, 38B, 40A, 40B, 42A, 42B);
**characterized in that** each internal wall (21A, 21B) comprises second means for collecting the oil sprayed substantially transversely by rotation of the ring gear (14) in a second direction of rotation (R2) from the bottom of the ring gear (14) in the direction of the reducer shafts (26, 28).

2. Differential reducer (10) according to the preceding claim, **characterized in that** the second collection means comprise a lower ramp (70) for guiding the oil that is formed in the internal transverse wall (21A, 21B) of at least one of the half-cases (20A, 20B) in order to guide the lubricating oil sprayed from the bottom of the ring gear (14) to the pinion (30) of the primary shaft (26).

3. Differential reducer (10) according to the preceding claim, **characterized in that** the pinion (32) of the secondary shaft (26) is arranged at a distance from the oil flow flowing on the lower ramp (70).

4. Differential reducer (10) according to the preceding claim, **characterized in that** the secondary shaft (26) is offset vertically above the level of the primary shaft (28).

5. Differential reducer (10) according to any one of Claims 2 to 4, **characterized in that** the ramp (70) is produced by a rib which extends longitudinally while projecting from the internal transverse wall (21A).

6. Differential reducer (10) according to any one of Claims 2 to 5, **characterized in that** the housing (42A, 42B) of the bearing (34) of the primary shaft (28) comprises in its axial face at least one opening (68, 96) for collecting and guiding the oil lifted by the pinion (30) of the primary shaft (28) from the lower ramp (70) when the ring gear (14) rotates in the second direction of rotation (R2).

7. Differential reducer (10) according to any one of Claims 2 to 6, **characterized in that** the perimeter of the housing (40A) of the bearing (36) of the secondary shaft (26) comprises at least one duct (72) for collecting and guiding the oil lifted by the pinion (30) of the primary shaft (28) from the lower ramp (70) when the ring gear (14) rotates in the second direction of rotation, the duct (72) guiding the oil to said housing (40A).

8. Differential reducer (10) according to any one of Claims 2 to 6, **characterized in that** the perimeter of the housing (40B) of the bearing (36) of the secondary shaft (26) comprises at least one face (94) for collecting and guiding the oil sprayed by the pinion (30) of the primary shaft (28) when the ring gear (14) rotates in the second direction of rotation, the face (94) guiding the oil to said housing (40B).

9. Differential reducer (10) according to any one of Claims 2 to 8, **characterized in that** the perimeter of the housing of the first bearing of the differential mechanism comprises at least one face (52, 84) for collecting and guiding the oil sprayed by the ring gear (14) when it rotates in the second direction of rotation.

10. Differential reducer (10) according to any one of Claims 5 to 9, **characterized in that** at least one of the guide ducts or one of the guide faces is formed by at least one rib which extends longitudinally while projecting from the internal transverse wall (21A, 21B).

11. Differential reducer (10) according to any one of the preceding claims, **characterized in that** the first oil collection means are produced directly in the internal wall (21A, 21B) of the half-cases (20A, 20B).
